# EUROPÄISCHE PATENTSCHRIFT

(11) **EP 3 966 218 B1**
(45) Veröffentlichungstag und Bekanntmachung des Hinweises auf die Patenterteilung: **26.07.2023**
(21) Anmeldenummer: 19723405.7
(22) Anmeldetag: 10.05.2019
(51) Int. Cl.: C07F 7/08, C07F 7/18, C07F 17/00, B01J 31/02, B01J 31/22, C08G 77/12, C08G 77/18, C08L 83/04

(54) **HERSTELLUNG VON SILOXANEN IN GEGENWART VON KATIONISCHEN GERMANIUM(II)-VERBINDUNGEN**
PREPARATION OF SILOXANES IN THE PRESENCE OF CATIONIC GERMANIUM (II) COMPOUNDS
PRÉPARATION DE SILOXANES EN PRÉSENCE DE COMPOSÉS DE GERMANIUM(II) CATIONIQUES

(43) Veröffentlichungstag der Anmeldung: 16.03.2022
(73) Patentinhaber: Wacker Chemie AG, 81737 München (DE)
(72) Erfinder: FRITZ-LANGHALS, Elke, 85521 Ottobrunn (DE); WEIDNER, Richard, 84489 Burghausen (DE)
(74) Vertreter: Fritz, Helmut
(86) Internationale Anmeldenummer: PCT/EP2019/062023
(87) Internationale Veröffentlichungsnummer: WO 2020/228923

(56) Entgegenhaltungen:
- WO-A1-2019/068357

## Beschreibung

Die Erfindung betrifft ein Verfahren zur Herstellung von Siloxanen aus Mischungen von Hydrosiliciumverbindungen und Organosiliciumverbindungen, die eine Alkoxygruppierung aufweisen in Gegenwart einer kationischen Germanium(II)-Verbindung sowie diese Mischungen.

Es sind verschiedene Verfahren zur Herstellung von Siloxangruppierungen bekannt. Gängig sind vor allem Kondensationen nach dem Schema Si-OH + HO-Si -> Si-O-Si + H₂O, die jedoch bei Einsatz zweier verschiedener Silanole zu einem Gemisch aus Hetero- und Homokondensationsprodukten führen. Ein einheitliches Produkt kann in diesem Fall nicht hergestellt werden. Eine selektive Verknüpfung wird durch Edelmetallkatalysierte Dehydrokondensation von Si-H haltigen Silanen oder Siloxanen und Silanolen (Si-H + OH-Si -> Si-O-Si + H₂) erreicht, jedoch sind Silanole im Allgemeinen nicht lagerstabil. Ein wirtschaftlicher Nachteil ist die Verwendung von teuren Edelmetallkatalysatoren. Eine weitere Möglichkeit ist die in US2004/012668 beschriebene Umsetzung von H-Silanen oder H-Siloxanen mit Alkoxysilanen unter Abspaltung von Kohlenwasserstoffen (Si-H + RO-Si -> Si-O-Si + R-H) in Gegenwart von Tris(pentafluorphenyl)bor als Katalysator, welche als Piers-Rubinsztajn-Reaktion bekannt ist (M.A. Brook, Chem. Eur. J. 2018, 24, 8458). Ein Nachteil bei der Verwendung von B(C₆F₅)₃ ist, dass der Katalysator während der Umsetzung unter Bildung katalytisch inaktiver Verbindungen, insbesondere Dimethyl(pentafluorphenyl)silan verbraucht wird. Dadurch wird die Reaktion verlangsamt und es besteht die Gefahr, dass die Umsetzung vorzeitig zum Stillstand kommt. Es muss dann erneut Katalysator zugegeben werden. Dies verkompliziert die Prozessführung erheblich und verschlechtert die Reproduzierbarkeit der Umsetzung. Der Einsatz verhältnismäßig großer Mengen an Katalysator schon bei Reaktionsbeginn stellt keine Lösung des Problems dar, da dies zu einem ungünstigen Prozessverlauf mit einer sehr raschen Anfangsphase führt, die aufgrund der Exothermie der Reaktion technisch nur schwer kontrollierbar ist und ein erhebliches Sicherheitsrisiko darstellt. Außerdem wird das Verfahren durch den erhöhten Katalysatoreinsatz und dessen Verbrauch durch Desaktivierung erheblich verteuert.

Aus der WO2019/068357 (CO11720) ist bekannt, dass kationische Silicium(II)-Verbindungen die Umsetzung sehr effizient katalysieren und die bei der Verwendung von B(C₆F₅)₃ beobachteten Nachteile nicht aufweisen. Jedoch besteht bei diesen das Problem der hohen Luft- und Feuchtigkeitsempfindlichkeit, die den technischen Aufwand erhöht.

Es bestand daher die Aufgabe, ein Verfahren zur Herstellung von Siloxanen bereitzustellen, welches die obengenannten Nachteile nicht aufweist.

Diese Aufgabe wird durch den Einsatz von kationischen Germanium(II)-Verbindungen in Gegenwart von Sauerstoff gelöst, wodurch ein hochaktives Katalysatorsystem entsteht, das die Piers-Rubinsztajn-Reaktion sehr effizient katalysiert.

Es wurde festgestellt, dass kationische Germanium(II)-Verbindungen in Gegenwart von Sauerstoff Piers-Rubinsztajn-Reaktionen katalysieren. Kationische Germanium(II)-Verbindungen sind zudem als Festkörper an Luft über mehrere Tage stabil. Dies ist überraschend, da die entsprechenden Silicium(II)-Verbindungen sehr rasch an Luft zersetzt werden. Dies stellt einen weiteren beträchtlichen technischen Vorteil der Germanium(II)- Verbindungen in Piers-Rubinsztajn-Reaktionen dar.

Ein Gegenstand der vorliegenden Erfindung ist eine Mischung **M** enthaltend
(a) mindestens eine Verbindung **A,** die ausgewählt ist aus
(a1) einer Verbindung der allgemeinen Formel **(I)**

   **R¹R²R³Si-H** **(I)**,

   worin die Reste **R¹**, **R²** und **R³** unabhängig voneinander ausgewählt werden aus der Gruppe bestehend aus (i) Wasserstoff, (ii) Halogen, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei zwei der Reste **R¹**, **R²** und **R³** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, **- C≡N,** - **OR^{z},** - **SR^{z},** - **NR^{z}₂,** - **PR^{z}₂,** - **O-CO-R^{z},** - **NH-CO-R^{z},** - **O-CO-OR^{z}** oder - **COOR^{z}** ersetzt sein, eine CH₂-Gruppe kann durch - **O -, - S -** oder - **NR^{z}**-ersetzt sein, und ein C-Atom kann durch ein Si-Atom ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest; und/oder
(a2) einer Verbindung der allgemeinen Formel (**I'**)

   **(SiO**_{4/2}**)**ₐ**(R^{x}SiO**_{3/2}**)**_{b}**(HSiO**_{3/2}**)**_{b'}**(R^{x}₂SiO**_{2/2}**)**_{c}**(R^{x}HSiO**_{2/2}**)**_{c'}**(H**₂**SiO**_{2/2}**)**_{c"}**(R^{x}**₃**S iO**_{1/2}**)**_{d}**(HR^{x}**₂**SiO**_{1/2}**)**_{d'}**(H**₂**R^{x}SiO**_{1/2}**)**_{d"}**(H₃SiO**_{1/2}**)**_{d‴} **(I')**,

   worin die Reste **R^{x}** unabhängig voneinander ausgewählt werden aus der Gruppe bestehend aus (i) Halogen, (ii) unsubstituierter oder substituierter C₁-C₂₀-Kohlenwasserstoffrest, und (iii) unsubstituierter oder substituierter C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen ersetzt sein, eine CH₂-Gruppe kann durch **- O -** oder - **NR^{z} -** ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest; und worin die Indices **a, b, b', c, c', c", d, d', d", d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c `, c", d, d', d", d‴** zusammen mindestens den Wert 2 annimmt und wenigstens einer der Indices **b', c', c", d', d"** oder **d‴** ungleich 0 ist; und
(b) mindestens eine Verbindung **B**, die ausgewählt ist aus
(b1) einer Verbindung der allgemeinen Formel **(II)**

   **R⁴R⁵R⁶Si-O-R⁷** **(II)**,

   worin Reste **R⁴, R⁵** und **R⁶** unabhängig voneinander ausgewählt werden aus der Gruppe bestehend aus (i) Wasserstoff, (ii) Halogen, (iii) unsubstituierter oder substituierter C₁-C₂₀-Kohlenwasserstoffrest, (iv) unsubstituierter oder substituierter, O-gebundener oder C-gebundener C₁-C₂₀-Kohlenwasserstoffoxyrest, (v) Organosiliciumrest mit 1-100.000 Si-Atomen, wobei zwei der Reste **R⁴**, **R⁵** und **R⁶** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **C≡N,** - **OR^{z},** - **SR^{z},** - **NR^{z}₂,** - **PR^{z}₂,** - **O-CO-R^{z},** - **NH-CO-R^{z},** - **O-CO-OR^{z}** oder - **COOR^{z}** ersetzt sein, eine CH₂-Gruppe kann durch **- O -, - S -** oder - **NR^{z}**-ersetzt sein, und ein C-Atom kann durch ein Si-Atom ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest;
   und worin der Rest **R⁷** ausgewählt wird aus der Gruppe bestehend aus (i) unsubstituierter oder substituierter C₁-C₂₀-Kohlenwasserstoffrest, und (ii) unsubstituierter oder substituierter C-gebundener C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **C≡N,** - **OR^{z},** - **SR^{z},** - **NR^{z}₂,** - **PR^{z}₂,** - **O-CO-R^{z},** - **NH-CO-R^{z},** - **O-CO-OR^{z}** oder - **COOR^{z}** ersetzt sein, eine CH₂-Gruppe kann durch **- O -, - S -** oder - **NR^{z}**-ersetzt sein, und ein C-Atom kann durch ein Si-Atom ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest; und/oder
(b2) einer Verbindung der allgemeinen Formel (**II'**)

   **R^{x}₃Si-O[-SiR^{x}₂-O]ₘ-[Si(OR⁷)R^{x}-O]ₙ-SiR^{x}₃** **(II')**,

   worin die Reste **R^{x}** unabhängig voneinander ausgewählt werden aus der Gruppe bestehend aus (i) Wasserstoff, (ii) Halogen, (iii) - **O-R⁷,** (iv) unsubstituierter oder substituierter C₁-C₂₀-Kohlenwasserstoffrest, und (v) unsubstituierter oder substituierter, C-gebundener C₁-C₂₀-Kohlenwasserstoffoxyrest; und worin die Reste **R⁷** jeweils unabhängig voneinander ausgewählt werden aus der Gruppe bestehend aus (i) unsubstituierter oder substituierter C₁-C₂₀-Kohlenwasserstoffrest und (ii) unsubstituierter oder substituierter C-gebundener C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **C≡N,** - **OR^{z},** - **SR^{z},** - **NR^{z}₂,** - **PR^{z}₂,** - **O-CO-R^{z},** - **NH-CO-R^{z},** - **O-CO-OR^{z}** oder - **COOR^{z}** ersetzt sein, eine CH₂-Gruppe kann durch **- O -, - S -** oder - **NR^{z}** - ersetzt sein, und ein C-Atom kann durch ein Si-Atom ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest, und worin **m** und **n** unabhängig voneinander eine ganze Zahl im Bereich von 0 bis 100.000 bedeuten, mit der Maßgabe, dass in der Verbindung mindestens eine Gruppe - **O-R⁷** enthalten ist; und
(c) mindestens eine Verbindung **C**, die ausgewählt ist aus kationischen Germanium(II)-Verbindungen der allgemeinen Formel (III)

   **([Ge(II)Cp]⁺)ₐ X^{a-}** **(III)**,

   worin **Cp** ein π-gebundener Cyclopentadienylrest der allgemeinen Formel **(IIIa)** ist 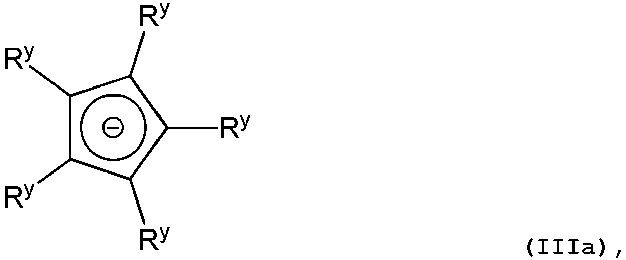 worin die Reste **R^{y}** unabhängig voneinander ausgewählt werden aus der Gruppe bestehend aus (i) Triorganosilylrest der Formel-**SiR^{b}₃,** worin die Reste **R^{b}** unabhängig voneinander C₁-C₂₀-Kohlenwasserstoffrest bedeuten, (ii) Wasserstoff, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei auch jeweils zwei Reste **R^{y}** miteinander einen monocyclischen oder polycyclischen C₂-C₂₀-Kohlenwasserstoffrest bilden können, und wobei substituiert jeweils meint, dass im Kohlenwasserstoff- oder Kohlenwasserstoffoxyrest auch mindestens ein C-Atom durch ein Si-Atom ersetzt sein kann,
X- eine Verbindung der Formel **[B(R^{a})₄]**⁻ ist, worin die Reste **R^{a}** jeweils unabhängig voneinander ausgewählt werden aus aromatischer C₆-C₁₄-Kohlenwasserstoffrest, bei dem mindestens ein Wasserstoffatom unabhängig voneinander durch einen Rest ausgewählt aus der Gruppe bestehend aus (i) Fluor, (ii) perfluorierter C₁-C₆-Alkylrest, und (iii) Triorganosilylrest der Formel - **SiR^{b}₃,** worin die Reste **R^{b}** unabhängig voneinander C₁-C₂₀-Alkylrest bedeuten, substituiert ist; und
**a** die Werte 1, 2 oder 3 annehmen kann.

Verbindung **A** In der Mischung **M** ist mindestens eine Verbindung **A** enthalten, womit auch Mischungen von Verbindungen der allgemeinen Formel (**I**) und/oder Mischungen von Verbindungen der allgemeinen Formel (I') umfasst sind.

Bevorzugt werden in Formel (I) die Reste **R¹**, **R²** und **R³** unabhängig voneinander ausgewählt aus der Gruppe bestehend aus (i) Wasserstoff, (ii) Chlor, (iii) unsubstituierter oder substituierter C₁-C₁₄-Kohlenwasserstoffrest, und (iv) unsubstituierter oder substituierter C₁-C₁₄-Kohlenwasserstoffoxyrest, wobei substituiert jeweils dieselbe Bedeutung wie zuvor hat; und bevorzugt werden in Formel (**I'**) die Reste **R^{x}** unabhängig voneinander ausgewählt aus der Gruppe bestehend aus Chlor, C₁-C₆-Alkylrest, C₂-C₆-Alkenylrest, Phenyl, und C₁-C₆-Alkoxyrest, und die Indices **a, b, b', c, c', c", d, d', d", d‴** werden unabhängig voneinander ausgewählt aus einer ganzen Zahl im Bereich von 0 bis 1.000.

Besonders bevorzugt werden in Formel (**I**) die Reste **R¹**, **R²** und **R³** unabhängig voneinander ausgewählt aus der Gruppe bestehend aus (i) Wasserstoff, (ii) Chlor, (iii) C₁-C₆-Alkylrest, (iv) C₂-C₆-Alkenylrest, (v) unsubstituierter oder substituierter C₆-C₁₄-Arylrest, (vi) unsubstituierter oder substituierter C₆-C₁₄-Aralkylrest und (vii) C₁-C₆-Alkoxyrest, wobei substituiert jeweils dieselbe Bedeutung wie zuvor hat; und besonders bevorzugt werden in Formel (**I'**) die Reste **R^{x}** unabhängig voneinander ausgewählt aus der Gruppe bestehend aus Chlor, Methyl, Methoxy, Ethyl, Ethoxy, n-Propyl, n-Propoxy, und Phenyl, und die Indices **a, b, b', c, c', c", d, d', d", d‴** werden unabhängig voneinander ausgewählt aus einer ganzen Zahl im Bereich von 0 bis 1.000.

Eine Mischung von Verbindungen der Formel **(I')** liegt insbesondere bei Polysiloxanen vor. Der Einfachheit halber werden für Polysiloxane jedoch nicht die einzelnen Verbindungen der Mischung angegeben, sondern es wird eine der Formel **(I')** ähnliche mittlere Formel (**I'a**) angegeben

**(SiO_{4/2})ₐ(R^{x}SiO_{3/2})_{b}(HSiO_{3/2})_{b'}(R^{x}₂SiO_{2/2})_{c}(R^{x}HSiO_{2/2})_{c'}(H₂SiO_{2/2})_{c"}(R^{x}₃S iO_{1/2})_{d}(HR^{x}₂SiO_{1/2})_{d'}(H₂R^{x}SiO_{1/2})_{d"}(H₃SiO_{1/2})_{d‴}** **(I'a),**

worin die Reste **R^{x}** dieselbe Bedeutung wie in Formel (**I'**) haben, die Indices **a, b, b', c, c', c", d, d', d", d‴** jedoch unabhängig voneinander eine Zahl im Bereich von 0 bis 100.000 bedeuten und den mittleren Gehalt der jeweiligen Siloxaneinheit in der Mischung angeben. Bevorzugt werden solche Mischungen der mittleren Formel (**I'a**), worin die Indices **a, b, b', c, c', c", d, d', d", d‴** unabhängig voneinander ausgewählt werden aus einer Zahl im Bereich von 0 bis 20.000.

Beispiele für Verbindungen **A** der allgemeinen Formel (**I**) sind die folgenden Silane (Ph = Phenyl, Me = Methyl, Et = Ethyl): **Me**₃**SiH, Et**₃**SiH, Me**₂**PhSiH, MePh**₂**SiH, Me**₂**ClSiH, Et**₂**ClSiH, MeCl**₂**SiH, Cl**₃**SiH, HMe**₂**Si-Ph-SiMe**₂**H, Me₂(MeO)SiH, Me(MeO)**₂**SiH, (MeO)**₃**SiH, Me₂(EtO)SiH, Me(EtO)₂SiH, (EtO)₃SiH;** und Beispiele für Verbindungen **A** der allgemeinen Formel (**I'**) sind die folgenden Siloxane und Polysiloxane:
**HSiMe₂-O-SiMe₂H, Me₃Si-O-SiHMe₂, Me₃Si-O-SiHMe-O-SiMe₃, H-SiMe₂-(O-SiMe₂)ₘ-O-SiMe₂-H,** worin **m** eine Zahl im Bereich von 1 bis 20.000 ist,
**Me₃Si-O-(SiMe₂-O)ₙ(SiHMe-O)ₒ-SiMe₃,** worin **n** und **o** unabhängig voneinander eine Zahl im Bereich von 1 bis 20.000 sind.

### Verbindung B

In der Mischung **M** ist mindestens eine Verbindung **B** enthalten, womit auch Mischungen von Verbindungen der allgemeinen Formel (**II**) und/oder Mischungen von Verbindungen der allgemeinen Formel (**II'**) umfasst sind.

Bevorzugt werden in Formel (**II**) die Reste **R⁴, R⁵** und **R⁶** unabhängig voneinander ausgewählt aus der Gruppe bestehend aus (i) Wasserstoff, (ii) Chlor, (iii) unsubstituierter oder substituierter C₁-C₁₄-Kohlenwasserstoffrest, und (iv) unsubstituierter oder substituierter, O-gebundener oder C-gebundener C₁-C₁₄-Kohlenwasserstoffoxyrest, und der Rest **R⁷** wird ausgewählt aus der Gruppe bestehend aus (i) unsubstituierter oder substituierter C₁-C₆-Kohlenwasserstoffrest, und (ii) unsubstituierter oder substituierter C-gebundener C₁-C₆-Kohlenwasserstoffoxyrest; und bevorzugt werden in Formel (**II'**) die Reste **R^{x}** unabhängig voneinander ausgewählt aus der Gruppe bestehend aus (i) Wasserstoff, (ii) Chlor, (iii) - **O-R⁷,** (iv) unsubstituierter oder substituierter C₁-C₁₄-Kohlenwasserstoffrest, und (v) unsubstituierter oder substituierter C-gebundener C₁-C₁₄-Kohlenwasserstoffoxyrest, und die Reste **R⁷** werden jeweils unabhängig voneinander ausgewählt aus der Gruppe bestehend aus (i) unsubstituierter oder substituierter C₁-C₆-Kohlenwasserstoffrest, und (ii) unsubstituierter oder substituierter C-gebundener C₁-C₆-Kohlenwasserstoffoxyrest.

Besonders bevorzugt werden in Formel (**II**) die Reste **R⁴, R⁵** und **R⁶** unabhängig voneinander ausgewählt aus der Gruppe bestehend aus (i) Wasserstoff, (ii) Chlor, (iii) C₁-C₆-Alkylrest, (iv) C₁-C₆-Alkenylrest, (v) Phenylrest, und (vi) C₁-C₆-Alkoxyrest, und der Rest **R⁷** wird ausgewählt aus der Gruppe bestehend aus (i) unsubstituierter oder substituierter C₁-C₆-Kohlenwasserstoffrest, und (ii) unsubstituierter oder substituierter C-gebundener C₁-C₆-Kohlenwasserstoffoxyrest; und besonders bevorzugt werden in Formel (**II'**) die Reste **Rx** unabhängig voneinander ausgewählt aus der Gruppe bestehend aus (i) Wasserstoff, (ii) Chlor, (iii) C₁-C₆-Alkylrest, (iv) C₁-C₆-Alkenylrest, (v) Phenylrest, (vi) - **O-R⁷,** und die Reste **R⁷** werden jeweils unabhängig voneinander ausgewählt aus der Gruppe bestehend aus (i) unsubstituierter oder substituierter C₁-C₆-Kohlenwasserstoffrest, und (ii) unsubstituierter oder substituierter C-gebundener C₁-C₆-Kohlenwasserstoffoxyrest.

Besonders bevorzugt werden in Formel (**II**) die Reste **R⁴, R⁵** und **R⁶** ausgewählt aus der Gruppe bestehend aus Methyl, Ethyl, Propyl, Phenyl, und Chlor, und **R⁷** wird ausgewählt aus der Gruppe bestehend aus Methyl, Ethyl, Propyl, Butyl, Pentyl; und besonders bevorzugt werden in Formel (**II'**) die Reste **R^{x}** unabhängig voneinander ausgewählt aus der Gruppe bestehend aus Methyl, Ethyl, Propyl, Phenyl, Chlor und - **OR⁷,** worin die Reste **R⁷** jeweils unabhängig voneinander ausgewählt werden aus der Gruppe bestehend aus Methyl, Ethyl, Propyl, Butyl, und Pentyl.

Beispiele für Verbindungen der Formel (**II'**) sind

**R^{x}**₃**Si-O[-SiR^{x}**₂**-O]ₘ-[Si(OR⁷)₂-O]**_{1-100.000}**-SiR^{x}**₃**,**

**R^{x}**₃**Si-O[-SiR^{x}₂-O]ₘ-[Si (OR⁷)R^{x}-O]**_{1-100.000}**-SiR^{x}**₃,

**(OR⁷)R^{x}₂Si-O[-SiR^{x}₂-O]**ₘ-**[Si(OR⁷)R^{x}-O] ₙ-SiR^{x}₃,**

**(OR⁷)R^{x}₂Si-O[-SiR^{x}₂-O]**ₘ-**[Si (OR⁷)₂-O]ₙ-SiR^{x}₃,**

**(OR⁷)R^{x}₂Si-O[-SiR^{x}₂-O]ₘ-[Si (OR⁷)R^{x}-O] ₙ-SiR^{x}₂(OR⁷),**

**(OR⁷)R^{x}₂Si-O[-SiR^{x}₂-O]ₘ-[Si (OR⁷)₂-O]ₙ-SiR^{x}₂(OR⁷),**

**(OR⁷)₂R^{X}Si-O[-SiR^{x}₂-O]ₘ-[Si (OR⁷)R^{x}-O] ₙ-SiR^{x}₃,**

**(OR⁷)₂R^{x}Si-O[-SiR^{x}₂-O]ₘ-[Si (OR⁷)₂-O]ₙ-SiR^{x}₃,**

**(OR⁷)₂R^{x}Si-O[-SiR^{x}₂-O]ₘ-[Si (OR⁷)R^{x}-O] ₙ-SiR^{x}(OR⁷)₂,**

**(OR⁷)₂R^{x}Si-O[-SiR^{x}₂-O]ₘ-[Si (OR⁷)₂-O]ₙ-SiR^{x}(OR⁷)₂,**

**(OR⁷)₃Si-O[-SiR^{x}₂-O]ₘ-[Si (OR⁷)R^{x}-O] ₙ-SiR^{x}₃,**

**(OR⁷)₃Si-O[-SiR^{x}₂-O]ₘ-[Si (OR⁷)₂-O]ₙ-SiR^{x}₃,**

**(OR⁷)₃Si-O[-SiR^{x}₂-O]ₘ-[Si (OR⁷)R^{x}-O] ₙ-Si(OR⁷)₃**,

**(OR⁷)₃Si-O[-SiR^{x}₂-O]ₘ-[Si (OR⁷)₂-O]ₙ-Si(OR⁷)₃**,

worin **R⁷, R^{x}, m** und **n** dieselbe Bedeutung wie in Formel (**II'**) haben.

Beispiele für Verbindungen **B** der allgemeinen Formel (**II**) sind die folgenden Silane (Ph = Phenyl, Me = Methyl, Et = Ethyl): **Me₃SiOEt, Me₃SiOMe, Et₃SiOEt, Et₃SiOMe, Me₂PhSiOEt, Me₂PhSiOMe, MePh₂SiOEt, Me₂Si(OMe)₂**, **Me₂Si(OEt)₂**, **Ph₂Si(OMe)₂**, **Ph₂Si(OEt)₂**, **MeSi(OMe)₃, MeSi(OEt)₃, PhSi(OMe)₃, Me₂SiH(OMe), Ph₂SiH(OMe), Me₂SiH(OEt), Ph₂SiH(Et), Si(OMe)₄, Si(OEt)₄,** *i-*Octyltriethoxysilan, i-Octyltrimethoxysilan. Beispiele für Verbindungen der allgemeinen Formel (**II'**) sind die folgenden Siloxane und Polysiloxane:
**Me₃Si-O-SiMe₂OMe, Me₃Si-O-SiMe₂OEt, EtOSiMe₂-O-SiMe₂OEt, (MeO)₂SiMe-O-SiMe(OMe)₂, (EtO)₂SiMe-O-SiMe(OEt)₂, (MeO)₃Si-O-Si(OMe)₃, (EtO)₃Si-O-Si(OEt)₃**, **Me₃Si-O-SiMe(OMe)-O-SiMe₃, Me₃Si-O-SiMe(OEt)-O-SiMe₃, MeO-SiMe₂-(O-SiMe₂)ₘ-O-SiMe₂-OMe** und **EtO-SiMe₂-(O-SiMe₂)ₘ-O-SiMe₂-OEt** mit **m** = 1 - 20.000, **Me₃Si-O-(SiMe₂**-**O)ₙ(SiMe(OMe)-O)ₒ-SiMe₃** und **Me₃Si-O-(SiMe₂-O)ₙ(SiMe(OEt)-O)ₒ**-**SiMe₃** mit **n** = 1 - 20.000 und **o** = 1 - 20.000.

In einer besonderen Ausführungsform liegen die Verbindung **A** und die Verbindung **B** in einem Molekül vor. Derartige Moleküle sind zum Beispiel Verbindungen der allgemeinen Formel (**II**), worin mindestens ein Rest **R⁴, R⁵, R⁶** Wasserstoff bedeutet, oder Verbindungen der allgemeinen Formel **(II'),** worin mindestens ein Rest **R^{x}** Wasserstoff bedeutet.

Beispiele solcher Moleküle sind Dimethylethoxysilan, Dimethylmethoxysilan, Diphenylmethoxysilan, Diphenylethoxysilan, Methyldiethoxysilan, Methyldimethoxysilan.

### Verbindung C

Beispiele für Reste **R^{y}** in Formel (**III**) sind Alkylreste, wie der Methyl-, Ethyl-, n-Propyl-, iso-Propyl-, n-Butyl-, sec-Butyl-, iso-Butyl-, tert.-Butyl-, n-Pentyl-, sec-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthracen- und Phenanthrenrest; Alkarylreste, wie der o-, m- und p-Tolyl-, Xylyl-, Mesitylenyl- und o-, m- und p-Ethylphenylrest; Alkarylreste, wie der Benzylrest, der α- und der β-Phenylethylrest; und Alkylsilylreste wie Trimethylsilyl, Triethylsilyl, Tripropylsilyl, Dimethylethylsilyl, Dimethyl-tert-butylsiyl und Diethylmethylsilylrest.

Bevorzugt werden in Formel (**III**) die Reste **R^{y}** unabhängig voneinander ausgewählt aus der Gruppe bestehend aus (i) C₁-C₃-Alkylrest, (ii) Wasserstoff und (iii) Triorganosilylrest der Formel - **SiR^{b}₃,** worin die Reste **R^{b}** unabhängig voneinander C₁-C₂₀-Alkylrest bedeuten. Besonders bevorzugt werden die Reste **R^{y}** unabhängig voneinander ausgewählt aus Methylrest und Trimethylsilylrest. Ganz besonders bevorzugt sind alle Reste **R^{y}** ein Methylrest.

Der Index **a** in Formel (**III**) ist bevorzugt 1, sodass **X⁻** ein einwertiges Anion bedeutet wie in Anspruch 1 definiert.

Beispiele für Reste **R^{a}** sind m-Difluorphenylrest, 2,2,4,4-Tetrafluorphenylrest, perfluorierter 1-Naphthylrest, perfluorierter 2-Naphthylrest, Perfluorbiphenylrest, - C₆F₅,-C₆H₃(m-CF₃)₂, - C₆H₄(p-CF₃), - C₆H₂(2,4,6-CF₃)₃, - C₆F₃(m-SiMe₃)₂, - C₆F₄(p-SiMe₃), -C₆F₄(p-SiMe₂t-butyl).

In Formel (**III**) sind die Anionen **X-**ausgewählt aus der Gruppe bestehend aus den Verbindungen der Formel **[B(R^{a})₄]⁻**, worin die Reste **R^{a}** unabhängig voneinander ausgewählt werden aus aromatischer C₆-C₁₄-Kohlenwasserstoffrest, bei dem alle Wasserstoffatome unabhängig voneinander durch einen Rest ausgewählt aus der Gruppe bestehend aus (i) Fluor und (ii) Triorganosilylrest der Formel - **SiR^{b}₃,** worin die Reste **R^{b}** unabhängig voneinander C₁-C₂₀-Alkylrest bedeuten, substituiert sind.

Ganz besonders bevorzugt werden in Formel (**III**) die Anionen **X-**ausgewählt aus der Gruppe bestehend aus den Verbindungen der Formel **[B(R^{a})₄]⁻**, worin die Reste **R^{a}** unabhängig voneinander ausgewählt werden aus der Gruppe bestehend aus - **C₆F₅**, perfluorierter 1- und 2-Naphthylrest, - **CeF₃(SiR^{b}₃)₂** und-**C₆F₄(SiR^{b}₃),** worin die Reste **R^{b}** jeweils unabhängig voneinander C₁-C₂₀-Alkylrest bedeuten.

Am meisten bevorzugt werden in Formel (**III**) die Anionen **X-**ausgewählt aus der Gruppe bestehend aus **[B(C₆F₅)₄]⁻**, **[B(C₆F₄(4-TBS)₄]⁻** mit TBS = SiMe₂*tert*-Butyl, **[B(2-NaphF)₄]⁻** mit 2-NaphF = perfluorierter 2-Naphthylrest und **[B(C₆F₅)₃(2-NaphF)]⁻** mit 2-NaphF = perfluorierter 2-Naphthylrest.

Bevorzugte Verbindungen der Formel (**III**) sind solche, in denen alle Reste **R^{y}** Methyl bedeuten und die Anionen **X-** ausgewählt werden aus der Gruppe bestehend aus den Verbindungen der Formeln **[B(R^{a})₄]⁻**, worin die Reste **R^{a}** unabhängig voneinander ausgewählt werden aus aromatischer C₆-C₁₄-Kohlenwasserstoffrest, bei dem mindestens ein Wasserstoffatom unabhängig voneinander durch einen Rest ausgewählt aus der Gruppe bestehend aus (i) Fluor, (ii) perfluorierter C₁-C₆-Alkylrest, und (iii) Triorganosilylrest der Formel **- SiR^{b}₃,** worin die Reste **R^{b}** unabhängig voneinander C₁-C₂₀-Alkylrest bedeuten, substituiert ist.

Besonders bevorzugt werden die Verbindungen der Formel (**III**) ausgewählt aus der Gruppe bestehend aus **Cp*Ge⁺ B(C₆F₅)₄⁻;**
**Cp*Ge⁺ B[C₆F₄(4-TBS)]₄⁻,** mit TBS = **SiMe₂*tert*-Butyl;**
**Cp*Ge⁺ B(2-NaphF)₄⁻,** mit 2-NaphF = perfluorierter 2-Naphthylrest; und
**Cp*Ge⁺ B[(C₆F₅)₃(2-NaphF)]⁻**, mit 2-NaphF = perfluorierter 2-Naphthylrest.

Die erfindungsgemäße Mischung **M** kann beliebige weitere Verbindungen wie z.B. Prozesshilfsstoffe, z.B. Emulgatoren, Füllstoffe, z.B. hochdisperse Kieselsäure oder Quarz, Stabilisatoren, z.B. Radikalinhibitoren, Pigmente, z.B. Farbstoffe oder Weißpigmente, z.B. Kreide oder Titandioxid enthalten. Bevorzugt liegen die Mengen der weiteren Verbindungen zwischen 0,1 Gew.-% und 95 Gew.-%, besonders bevorzugt zwischen 1 Gew.-% und 80 Gew.-%, ganz besonders bevorzugt zwischen 5 Gew.-% und 30 Gew.-%, jeweils bezogen auf das Gesamtgewicht der Mischung **M.**

Ein weiterer Gegenstand der Erfindung ist ein Verfahren zur Herstellung von Siloxanen mittels einer Piers-Rubinsztajn-Reaktion aus der erfindungsgemäßen Mischung **M,** wobei mindestens eine Verbindung **A** mit mindestens einer Verbindung **B** in Gegenwart von mindestens einer Verbindungen **C** und in Gegenwart von Sauerstoff umgesetzt wird.

Die Sauerstoffmenge ist bei der Piers-Rubinsztajn-Reaktion nicht wesentlich, jedes dem Fachmann bekannte Sauerstoff-haltige Gasgemisch, wie z.B. Umgebungsluft, Magerluft, etc. kann verwendet werden. Bevorzugt stammt der Sauerstoff aus einem Sauerstoff-haltigen Gasgemisch mit einem Anteil an Sauerstoff von 0,1 - 100 Vol.-%.

Es ist ferner nicht wesentlich, wann und wie der Sauerstoff zugegeben wird. Das Sauerstoff-haltige Gas kann z.B. einmalig in den Gasraum gegeben werden, oder es kann kontinuierlich eingeleitet werden, oder es kann, vor dessen Zugabe, über die kationische Germanium(II)-Verbindung geleitet werden, oder es kann in eine Lösung der kationischen Germanium(II)-Verbindung eingeleitet werden, oder es kann über sonstige dem Fachmann bekannte Verfahren mit der Reaktionsmischung in Kontakt gebracht werden.

Die Reaktanden können in beliebiger Reihenfolge miteinander vermischt werden, wobei das Vermischen in einer dem Fachmann bekannten Weise erfolgt. Beispielsweise können die Verbindungen **A, B und C** vermischt werden, so dass die Piers-Rubinsztajn-Reaktion durch Kontakt mit Sauerstoff ausgelöst wird. Ebenso ist es möglich, zunächst die Verbindungen **A** und **B** oder **A** und **C** oder **B** und **C** zu mischen, und dann die noch fehlende Verbindung hinzuzufügen. Außerdem kann gemäß einer bevorzugten Ausführungsform ein Molekül eingesetzt werden, das die Verbindungen **A** und **B** enthält. Dies können zum Beispiel die entsprechenden bevorzugten Verbindungen **B** sein, die mindestens ein Wasserstoffatom enthalten und vorstehend näher bezeichnet sind.

In einer besonderen Ausführungsform wird die Piers-Rubinsztajn-Reaktion der erfindungsgemäßen Mischung **M** unter Luft-, Magerluft- oder Sauerstoffatmosphäre durchgeführt.

In einer weiteren besonderen Ausführungsform wird eine Lösung der Verbindung **C** mit Sauerstoff in Kontakt gebracht und zu einem späteren Zeitpunkt mit Verbindung **A** und Verbindung **B** vermischt.

Das molare Verhältnis zwischen den vorhandenen direkt an Silicium gebundenen Wasserstoffatomen und direkt an Silicium gebundenen Alkoxygruppierungen liegt üblicherweise im Bereich von 1:100 bis 100:1, bevorzugt liegt das molare Verhältnis im Bereich von 1:10 bis 10:1, besonders bevorzugt im Bereich 1:2 bis 2:1.

Der molare Anteil der kationischen Germanium(II)-Verbindung **C** bezogen auf die vorhandenen Si-H-Gruppierungen der Verbindung **A** liegt bevorzugt im Bereich von 0,0001 mol-% bis 10 mol-%, besonders bevorzugt im Bereich von 0,001 mol-% bis 1 mol-%, ganz besonders bevorzugt im Bereich von 0,01 mol-% bis 0,1 mol-%.

Die Piers-Rubinsztajn-Reaktion kann ohne Lösemittel oder mit Zusatz eines oder mehrerer Lösemittel durchgeführt werden. Der Anteil des Lösemittels oder des Lösemittelgemisches beträgt bezogen auf die Verbindung **A** bevorzugt mindestens 0,01 Gew.-% und höchstens die 1000-fache Gewichtsmenge, besonders bevorzugt mindestens 1 Gew.-% und höchstens die 100-fache Gewichtsmenge, ganz besonders bevorzugt mindestens 10 Gew.-% und höchstens die 10-fache Gewichtsmenge.

Als Lösemittel können bevorzugt aprotische Lösemittel, beispielsweise Kohlenwasserstoffe wie Pentan, Hexan, Heptan, Cyclohexan oder Toluol, Chlorkohlenwasserstoffe wie Dichlormethan, Chloroform, Chlorbenzol oder 1,2-Dichlorethan, Ether wie Diethylether, Methyl-tert.-butylether, Anisol, Tetrahydrofuran oder Dioxan, oder Nitrile wie z.B. Acetonitril oder Propionitril, eingesetzt werden.

Lösemittel oder Lösemittelgemische mit einem Siedepunkt bzw. Siedebereich von bis zu 120 °C bei 0,1 MPa sind bevorzugt. Bevorzugt handelt es sich bei den Lösemitteln um aromatische oder aliphatische Kohlenwasserstoffe.

Der Druck bei der Piers-Rubinsztajn-Reaktion kann vom Fachmann frei gewählt werden, sie kann unter Umgebungsdruck oder unter vermindertem oder unter erhöhtem Druck durchgeführt werden. Der Druck liegt bevorzugt in einem Bereich von 0,01 bar bis 100 bar, besonders bevorzugt in einem Bereich von 0,1 bar bis 10 bar, ganz besonders bevorzugt wird die Piers-Rubinsztajn-Reaktion bei Umgebungsdruck durchgeführt. Sind jedoch an der Piers-Rubinsztajn-Reaktion Verbindungen beteiligt, die bei der Reaktionstemperatur gasförmig vorliegen, erfolgt bevorzugt eine Umsetzung unter erhöhtem Druck, besonders bevorzugt bei dem Dampfdruck des Gesamtsystems.

Der Fachmann kann die Temperatur der Piers-Rubinsztajn-Reaktion frei wählen. Sie erfolgt bevorzugt bei einer Temperatur im Bereich von + 40 °C bis + 200 °C, besonders bevorzugt im Bereich von + 50 °C bis + 150 °C, ganz besonders bevorzugt im Bereich von + 60 °C bis + 120°C.

In einer weiteren Ausführungsform wird eine Verbindung **A** eingesetzt, welche mehr als eine Si-H-Gruppierung enthält, und eine Verbindung **B**, die mehr als eine Silicium-Alkoxygruppierung enthält. Es ist gemäß einer bevorzugten Ausführungsform auch möglich, ein Molekül einzusetzen, welches sowohl Verbindung **A** (Si-H-Gruppierungen) als auch Verbindung **B** (Si-Alkoxy-Gruppierungen) enthält. Auf diese Weise können Copolymere erhalten werden.

Das erfindungsgemäße Verfahren kann beispielsweise zur Entfernung geringer Anteile an Si-Alkoxy-Gruppierungen eingesetzt werden, die als labile und daher oftmals in Anwendungen störende Verunreinigungen in Produkten vorhanden sind, die über andere Prozesse, beispielsweise hydrolytische Kondensationsreaktionen, hergestellt wurden, indem diese mit einer Verbindung **A** in Gegenwart von Verbindung **C** und Sauerstoff umgesetzt werden.

Die labilen Si-Alkoxygruppierungen werden hierbei in inerte Si-O-Si-Gruppierungen umgewandelt. In analoger Weise können auch Produkte, welche noch unerwünschte Si-H-Gruppierungen, beispielsweise aus Hydrosilylierungsreaktionen, enthalten, durch Umsetzung mit einer Verbindung **B** in Gegenwart von Verbindung **C** und Sauerstoff umgesetzt werden.

Ein weiterer Gegenstand der Erfindung ist die Verwendung der kationischen Germanium(II)-Verbindungen gemäß Formel (**III**) als Katalysator für Piers-Rubinsztajn-Reaktionen.

### Beispiele

### Herstellung von Cp*Ge⁺ B(C₆F₅)₄⁻

Unter einer Argonatmosphäre wurden 701 mg (2,04 mmol) Decamethylgermanocen (Cp*₂Ge,

Cp* = Pentamethylcyclopentadienyl) in 5 ml Dichlormethan gelöst und bei Raumtemperatur langsam unter Schütteln mit einer Lösung von 1,70 g (1,83 mmol) (C₆H₅)₃C⁺ B(C₆F₅)₄⁻, in 5 ml Dichlormethan versetzt. Anschließend wurde als Fällungsmittel so viel Heptan zugegeben, dass keine weitere Ausfällung des Produkts mehr erfolgte. Die überstehende Lösung wurde abdekantiert, die Fällung erneut in Dichlormethan gelöst und wiederum mit Heptan gefällt. Das gefällte Produkt wurde abgesaugt und getrocknet, zuletzt im Hochvakuum. Ausbeute: 1,63 g (97 %), blass-rosa Feststoff.
¹H-NMR (CD₂Cl₂): δ = 2,23 (Methylgruppen) .
¹³C-NMR (CD₂Cl₂): δ = 8,82 (Methylgruppen), δ = 123,1 (C's Cp*-Ring), δ = 124 (breit), δ = 135,3 (m), δ = 137,3 (m),
δ = 139,2 (m), δ = 147,2 (m), δ = 149,1 (m): aromat. C-F. ¹¹B-NMR (CD₂Cl₂): δ = -16,66 (s) .
¹⁹F-NMR (CD₂Cl₂): δ = -167,4 (mc, 8 ortho-F), δ = -163,5 (mc, 4 para-F), δ = -132,9 (m, breit, 8 meta-F).

### Beispiel 1

In eine Lösung von 0,30 mg (0,45 pmol) (π-Me₅C₅)Ge⁺ B(C₆F₅)₄⁻ in 475 mg Dichlormethan wurde 3 Stunden lang Sauerstoff eingeleitet. Diese Lösung wurde dann mit 178 mg (0,650 mmol) Diethoxydiphenylsilan und 101 mg (0,752 mmol) 1,1,3,3-Tetramethyldisiloxan versetzt und 8 Stunden auf 60 °C erhitzt. Anschließend wurde das Lösungsmittel im Hochvakuum entfernt. Der Rückstand war ein farbloses hochviskoses Öl.

GPC: M_{w} = 20700, Mₙ = 6800, M_{w}/Mₙ = 3,00.

### Beispiel 2

In eine Lösung von 0,30 mg (0,45 pmol) (π-Me₅C₅)Ge⁺ B(C₆F₅)₄⁻ in 800 mg Dichlormethan wurde mit 160 mg (0,587 mmol) Diethoxydiphenylsilan und 101 mg (0,660 mmol) 1,4-Bis(dimethylsilyl)benzol versetzt, mittels einer Spritze wurden 3 x 3 ml Luft eingespritzt und die Mischung 4 Stunden auf 70 °C erhitzt. Anschließend wurde das Lösungsmittel im Hochvakuum entfernt. Der Rückstand war ein farbloses hochviskoses Öl.

GPC: M_{w} = 14600, Mₙ = 5700, M_{w}/Mₙ = 2,57.

### Beispiel 3

In eine Lösung von 0,4 mg (0,5 pmol) (π-Me₅C₅)Ge⁺ B(C₆F₅)₄⁻ in 1020 mg Dichlormethan wurde mit 341 mg (1,25 mmol) Diethoxydiphenylsilan und 361 mg (2,43 mmol)

Pentamethyldisiloxan versetzt, mittels einer Spritze wurden 3 x 3 ml Luft eingespritzt und die Mischung 2 Stunden auf 50 °C erhitzt. Das Hauptprodukt der Reaktion ist 1,1,1,3,3,7,7,9,9,9-Decamethyl-5,5-diphenyl-pentasiloxan. ²⁹Si-NMR (CD₂Cl₂): δ = -48.2 (SiPh₂), -20.2 (2 TMS-SiMe₂), 7.74 (2 Me₃Si). GC-MS: m/z = 508 (1 %, M⁺), 493 (15 %, M⁺-CH₃).

## Patentansprüche

1. Mischung **M** enthaltend
(a) mindestens eine Verbindung **A,** die ausgewählt ist aus
(a1) einer Verbindung der allgemeinen Formel (**I**)
**R¹R²R³Si-H** **(I)**,
worin die Reste **R¹**, **R²** und **R³** unabhängig voneinander ausgewählt werden aus der Gruppe bestehend aus (i) Wasserstoff, (ii) Halogen, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei zwei der Reste **R¹, R²** und **R³** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, **- C≡N**, - **OR^{z}**, - **SR^{z},** - **NR^{z}₂, - PR^{z}₂, - O-CO-R^{z}, - NH-CO-R^{z}, - O-CO-OR^{z}** oder - **COOR^{z}** ersetzt sein, eine CH₂-Gruppe kann durch **- O -**, **- S** - oder - **NR^{z}** - ersetzt sein, und ein C-Atom kann durch ein Si-Atom ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest; und/oder
(a2) einer Verbindung der allgemeinen Formel (**I'**)
**(SiO_{4/2})ₐ(R^{x}SiO_{3/2})_{b}(HSiO_{3/2})_{b'}(R^{x}₂SiO_{2/2})_{c}(R^{x}HSiO_{2/2})_{c'}(H₂SiO_{2/2})_{c"} (R^{x}₃SiO_{1/2})_{d}(HR^{x}₂SiO_{1/2})_{d'}(H₂R^{x}SiO_{1/2})_{d"}(H₃SiO_{1/2})_{d‴}** **(I'),**
worin die Reste **R^{x}** unabhängig voneinander ausgewählt werden aus der Gruppe bestehend aus (i) Halogen, (ii) unsubstituierter oder substituierter C₁-C₂₀-Kohlenwasserstoffrest, und (iii) unsubstituierter oder substituierter C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen ersetzt sein, eine CH₂-Gruppe kann durch **- O -** oder - **NR^{z}** - ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest; und worin die Indices **a, b, b', c, c', c", d, d`, d", d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c', c", d, d', d", d‴** zusammen mindestens den Wert 2 annimmt und wenigstens einer der Indices **b', c', c", d', d"** oder **d‴** ungleich 0 ist; und
(b) mindestens eine Verbindung **B,** die ausgewählt ist aus
(b1) einer Verbindung der allgemeinen Formel (**II**)
**R⁴R⁵R⁶Si-O-R⁷** **(II),**
worin Reste **R⁴, R⁵** und **R⁶** unabhängig voneinander ausgewählt werden aus der Gruppe bestehend aus (i) Wasserstoff, (ii) Halogen, (iii) unsubstituierter oder substituierter C₁-C₂₀-Kohlenwasserstoffrest, (iv) unsubstituierter oder substituierter, O-gebundener oder C-gebundener C₁-C₂₀-Kohlenwasserstoffoxyrest, (v) Organosiliciumrest mit 1-100.000 Si-Atomen, wobei zwei der Reste **R⁴, R⁵** und **R⁶** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, **- C≡N,** - **OR^{z}**, - **SR^{z},** - **NR^{z}₂,** - **PR^{z}₂**, - **O-CO-R^{z}**, - **NH-CO-R^{z},** - **O-CO-OR^{z}** oder - **COOR^{z}** ersetzt sein, eine CH₂-Gruppe kann durch **- O -**, **- S -** oder - **NR^{z}** - ersetzt sein, und ein C-Atom kann durch ein Si-Atom ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest; und worin der Rest **R⁷** ausgewählt wird aus der Gruppe bestehend aus (i) unsubstituierter oder substituierter C₁-C₂₀-Kohlenwasserstoffrest, und (ii) unsubstituierter oder substituierter C-gebundener C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, **- C≡N,** - **OR^{z}**, - **SR^{z},** - **NR^{z}₂,** - **PR^{z}₂**, - **O-CO-R^{z}**, - **NH-CO-R^{z},** - **O-CO-OR^{z}** oder - **COOR^{z}** ersetzt sein, eine CH₂-Gruppe kann durch **- O -**, **- S -** oder - **NR^{z}** - ersetzt sein, und ein C-Atom kann durch ein Si-Atom ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest; und/ oder
b2) einer Verbindung der allgemeinen Formel (**II`**)
**R^{x}₃Si-O[-SiR^{x}₂-O]ₘ-[Si(OR⁷₃)R^{x}-O]ₙ-SiR^{x}₃** **(II')**,
worin die Reste **R^{x}** unabhängig voneinander ausgewählt werden aus der Gruppe bestehend aus (i) Wasserstoff, (ii) Halogen, (iii) - **O-R⁷,** (iv) unsubstituierter oder substituierter C₁-C₂₀-Kohlenwasserstoffrest, und (v) unsubstituierter oder substituierter, C-gebundener C₁-C₂₀-Kohlenwasserstoffoxyrest; und worin die Reste **R⁷** jeweils unabhängig voneinander ausgewählt werden aus der Gruppe bestehend aus (i) unsubstituierter oder substituierter C₁-C₂₀-Kohlenwasserstoffrest und (ii) unsubstituierter oder substituierter C-gebundener C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, **- C≡N,** - **OR^{z}**, - **SR^{z}**, - **NR^{z}₂,** - **PR^{z}₂**, - **O-CO-R^{z}**, - **NH-CO-R^{z},** - **O-CO-OR^{z}** oder - **COOR^{z}** ersetzt sein, eine CH₂-Gruppe kann durch **- O -**, **- S -** oder - **NR^{z}** - ersetzt sein, und ein C-Atom kann durch ein Si-Atom ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest; und worin **m** und **n** unabhängig voneinander eine ganze Zahl im Bereich von 0 bis 100.000 bedeuten, mit der Maßgabe, dass in der Verbindung mindestens eine Gruppe - **O-R⁷** enthalten ist; und
(c) mindestens eine Verbindung C, die ausgewählt ist aus kationischen Germanium(II)-Verbindung der allgemeinen Formel (**III**)
**([Ge(II)Cp]⁺)**ₐ**X⁻** **(III),**
worin **Cp** ein π-gebundener Cyclopentadienylrest der allgemeinen Formel (**IIIa**) ist 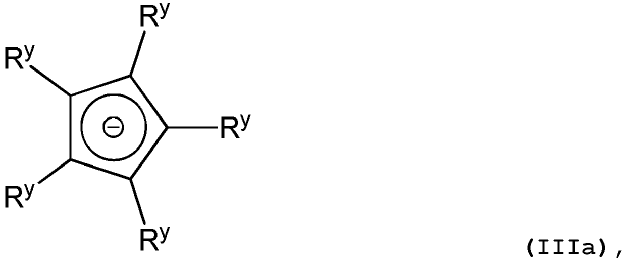 worin die Reste **R^{y}** unabhängig voneinander ausgewählt werden aus der Gruppe bestehend aus (i) Triorganosilylrest der Formel - **SiR^{b}₃,** worin die Reste **R^{b}** unabhängig voneinander C₁-C₂₀-Kohlenwasserstoffrest bedeuten, (ii) Wasserstoff, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei auch jeweils zwei Reste **R^{y}** miteinander einen monocyclischen oder polycyclischen C₂-C₂₀-Kohlenwasserstoffrest bilden können, wobei substituiert jeweils meint, dass im Kohlenwasserstoff- oder Kohlenwasserstoffoxyrest auch mindestens ein C-Atom durch ein Si-Atom ersetzt sein kann.
**X-** eine Verbindung der Formel **[B(R^{a})₄]⁻** ist, worin die Reste **R^{a}** jeweils unabhängig voneinander ausgewählt werden aus aromatischer C₆-C₁₄-Kohlenwasserstoffrest, bei dem mindestens ein Wasserstoffatom unabhängig voneinander durch einen Rest ausgewählt aus der Gruppe bestehend aus (i) Fluor, (ii) perfluorierter C₁-C₆-Alkylrest, und (iii) Triorganosilylrest der Formel - **SiR^{b}₃,** worin die Reste **R^{b}** unabhängig voneinander C₁-C₂₀-Alkylrest bedeuten, substituiert ist; und
a die Werte 1, 2 oder 3 annehmen kann.

2. Mischung **M** nach Anspruch 1, wobei in Formel (**I**) die Reste **R¹, R²** und **R³** unabhängig voneinander ausgewählt werden aus der Gruppe bestehend aus (i) Wasserstoff, (ii) Chlor, (iii) unsubstituierter oder substituierter C₁-C₁₂-Kohlenwasserstoffrest, und (iv) unsubstituierter oder substituierter C₁-C₁₂-Kohlenwasserstoffoxyrest, wobei substituiert dieselbe Bedeutung wie zuvor hat; und in Formel (**I'**) die Reste **R^{x}** unabhängig voneinander ausgewählt werden aus der Gruppe bestehend aus Chlor, C₁-C₆-Alkylrest, C₂-C₆-Alkenylrest, Phenyl, und C₁-C₆-Alkoxyrest, und die Indices **a, b, b', c, c', c", d, d', d", d‴** unabhängig voneinander ausgewählt werden aus einer ganzen Zahl im Bereich von 0 bis 1.

3. Mischung **M** nach Anspruch 2, wobei in Formel (**I**) die Reste **R¹, R²** und **R³** unabhängig voneinander ausgewählt werden aus der Gruppe bestehend aus (i) Wasserstoff, (ii) Chlor, (iii) C₁-C₆-Alkylrest, (iv) C₂-C₆-Alkenylrest, (v) unsubstituierter oder substituierter Phenylrest, und (vi) C₁-C₆-Alkoxyrest; und in Formel (**I'**) die Reste **R^{x}** unabhängig voneinander ausgewählt werden aus der Gruppe bestehend aus Chlor, Methyl, Methoxy, Ethyl, Ethoxy, n-Propyl, n-Propoxy, und Phenyl, und die Indices **a, b, b', c, c', c", d, d', d", d‴** unabhängig voneinander ausgewählt werden aus einer ganzen Zahl im Bereich von 0 bis 1.000.

4. Mischung **M** nach Anspruch 3, wobei in Formel (**I**) die Reste **R¹, R²** und **R³** und in Formel (**I'**) die Reste **R^{x}** unabhängig voneinander ausgewählt werden aus der Gruppe bestehend aus Wasserstoff, Chlor, Methyl, Methoxy, Ethyl, Ethoxy, n-Propyl, n-Propoxy, und Phenyl, und die Indices **a, b, b', c, c', c", d, d', d", d‴** unabhängig voneinander ausgewählt werden aus einer ganzen Zahl im Bereich von 0 bis 1.000.

5. Mischung **M** nach einem der Ansprüche 1-4, wobei in Formel (**II**) die Reste **R⁴**, **R⁵** und **R⁶** unabhängig voneinander ausgewählt werden aus der Gruppe bestehend aus (i) Wasserstoff, (ii) Chlor, (iii) unsubstituierter oder substituierter C₁-C₁₄-Kohlenwasserstoffrest, und (iv) unsubstituierter oder substituierter, O-gebundener oder C-gebundener C₁-C₁₄-Kohlenwasserstoffoxyrest, und der Rest **R⁷** ausgewählt wird aus der Gruppe bestehend aus (i) unsubstituierter oder substituierter C₁-C₆-Kohlenwasserstoffrest, und (ii) unsubstituierter oder substituierter C-gebundener C₁-C₆-Kohlenwasserstoffoxyrest; und wobei in Formel (**II`**) die Reste **R^{x}** unabhängig voneinander ausgewählt werden aus der Gruppe bestehend aus (i) Wasserstoff, (ii) Chlor, (iii) - **O-R⁷,** (iv) unsubstituierter oder substituierter C₁-C₁₄-Kohlenwasserstoffrest, und (v) unsubstituierter oder substituierter C-gebundener C₁-C₁₄-Kohlenwasserstoffoxyrest, und die Reste **R⁷** jeweils unabhängig voneinander ausgewählt werden aus der Gruppe bestehend aus (i) unsubstituierter oder substituierter C₁-C₆-Kohlenwasserstoffrest, und (ii) unsubstituierter oder substituierter C-gebundener C₁-C₆-Kohlenwasserstoffoxyrest.

6. Mischung **M** nach Anspruch 5, wobei in Formel (**II**) die Reste **R⁴**, **R⁵** und **R⁶** unabhängig voneinander ausgewählt werden aus der Gruppe bestehend aus (i) Wasserstoff, (ii) Chlor, (iii) C₁-C₆-Alkylrest, (iv) C₁-C₆-Alkenylrest, (v) Phenylrest, und (vi) C₁-C₆-Alkoxyrest, und der Rest **R⁷** wird ausgewählt aus der Gruppe bestehend aus (i) unsubstituierter oder substituierter C₁-C₆-Kohlenwasserstoffrest, und (ii) unsubstituierter oder substituierter C-gebundener C₁-C₆-Kohlenwasserstoffoxyrest; und worin in Formel (**II`**) die Reste **Rx** unabhängig voneinander ausgewählt werden aus der Gruppe bestehend aus (i) Wasserstoff, (ii) Chlor, (iii) C₁-C₆-Alkylrest, (iv) C₁-C₆-Alkenylrest, (v) Phenylrest, (vi) - **O-R⁷**, und die Reste **R⁷** jeweils unabhängig voneinander ausgewählt werden aus der Gruppe bestehend aus (i) unsubstituierter oder substituierter C₁-C₆-Kohlenwasserstoffrest, und (ii) unsubstituierter oder substituierter C-gebundener C₁-C₆-Kohlenwasserstoffoxyrest.

7. Mischung **M** nach einem der Ansprüche 1-6, wobei in Formel (**III**) die Reste **R^{y}** unabhängig voneinander ausgewählt werden aus der Gruppe bestehend aus (i) C₁-C₃-Alkylrest und (ii) Triorganosilylrest der Formel - **SiR^{b}₃,** worin die Reste **R^{b}** unabhängig voneinander C₁-C₂₀-Alkylrest bedeuten.

8. Mischung **M** nach Anspruch 7, wobei in Formel (**III**) alle Reste **R^{y}** Methyl bedeuten und die Anionen **X-** ausgewählt werden aus der Gruppe bestehend aus den Verbindungen der Formel **[B(R^{a})₄]⁻**, worin die Reste **R^{a}** unabhängig voneinander ausgewählt werden aus aromatischer C₆-C₁₄-Kohlenwasserstoffrest, bei dem alle Wasserstoffatome unabhängig voneinander durch einen Rest ausgewählt aus der Gruppe bestehend aus (i) Fluor und (ii) Triorganosilylrest der Formel - **SiR^{b}₃,** worin die Reste **R^{b}** unabhängig voneinander C₁-C₂₀-Alkylrest bedeuten, substituiert sind.

9. Mischung **M** nach Anspruch 8, wobei die Verbindung **C** ausgewählt ist aus der Gruppe bestehend aus Cp*Ge⁺ B(C₆F₅)₄⁻ ; **Cp*Ge⁺ B[C₆F₄(4-TBS)]₄⁻**, mit TBS = SiMe*₂tert*-Butyl; **Cp*Ge⁺ B(2-NaphF)₄⁻**, mit 2-NaphF = perfluorierter 2-Naphthylrest; und **Cp*Ge⁺ B[(C₆F₅)₃(2-NaphF)]⁻,** mit 2-NaphF = perfluorierter 2-Naphthylrest.

10. Verfahren zur Herstellung von Siloxanen mittels einer Piers-Rubinsztajn-Reaktion aus der Mischung **M** nach einem der Ansprüche 1-9, wobei mindestens eine Verbindung **A** mit mindestens einer Verbindung **B** in Gegenwart von mindestens einer Verbindung **C** und in Gegenwart von Sauerstoff umgesetzt wird.

11. Verfahren nach Anspruch 10, wobei die Temperatur in einem Bereich von + 40 °C bis + 200 °C liegt und der Druck in einem Bereich von 0,01 bar bis 100 bar liegt.

12. Verfahren nach einem der Ansprüche 10 oder 11, wobei der Sauerstoff aus einem Sauerstoff-haltigen Gasgemisch mit einem Anteil an Sauerstoff von 0,1 - 100 Vol.-% stammt.

13. Verfahren nach Anspruch 12, wobei die Umsetzung unter Luft-, Magerluft- oder Sauerstoffatmosphäre durchgeführt wird.

14. Verfahren nach einem der Ansprüche 11-13, wobei der molare Anteil der kationischen Germanium(II)-Verbindung bezogen auf die vorhandenen Si-H-Gruppierungen in der Verbindung **A** in einem Bereich von 0,001 mol-% bis 10 mol-% liegt.

15. Verwendung von kationischen Germanium(II)-Verbindungen der allgemeinen Formel (**III**) gemäß einem der Ansprüche 1, 7, 8 oder 9 als Katalysator für Piers-Rubinsztajn-Reaktionen.

## Claims

1. Mixture **M** comprising
(a) at least one compound **A** selected from
(a1) a compound of the general formula (**I**)
**R¹R²R³Si-H** **(I)**,
in which the radicals **R¹, R²** and **R³** are each independently selected from the group consisting of (i) hydrogen, (ii) halogen, (iii) unsubstituted or substituted C₁-C₂₀-hydrocarbon radical, and (iv) unsubstituted or substituted C₁-C₂₀-hydrocarbonoxy radical, where two of the radicals **R¹, R²** and **R³** may also form with each other a monocyclic or polycyclic, unsubstituted or substituted C₂-C₂₀-hydrocarbon radical, wherein substituted means in each case that the hydrocarbon or hydrocarbonoxy radical each independently has at least one of the following substitutions: a hydrogen atom can be replaced by halogen, **- C≡N**, - **OR^{z}**, - **SR^{z}**, - **NR^{z}₂,** - **PR^{z}₂**, **- O-CO-R^{z},** - **NH-CO-R^{z},** - **O-CO-OR^{z}** or - **COOR^{z},** a CH₂ group can be replaced by **- O -, - S -** or - **NR^{z}** -, and a carbon atom can be replaced by a Si atom, in which **R^{z}** is in each case independently selected from the group consisting of hydrogen, C₁-C₆-alkyl radical, C₆-C₁₄-aryl radical, and C₂-C₆-alkenyl radical; and/or
(a2) a compound of the general formula (**I'**)
**(SiO**_{4/2}**)**ₐ**(R^{x}SiO**_{3/2}**)**_{b}**(HSiO**_{3/2}**)**_{b'}**(R^{x}**₂**SiO**_{2/2}**)**_{c}**(R^{x}HSiO**_{2/2}**)**_{c'}**(H**₂**S iO**_{2/2}**)**_{c"}**(R^{x}₃SiO**_{1/2}**)**_{d}**(HR^{x}**₂**SiO**_{1/2}**)**_{d'}**(H₂R^{x}SiO**_{1/2}**)**_{d"}**(H₃SiO**_{1/2}**)**_{d"} **(I'),**
in which the radicals **R^{x}** are each independently selected from the group consisting of (i) halogen, (ii) unsubstituted or substituted C₁-C₂₀-hydrocarbon radical, and (iii) unsubstituted or substituted C₁-C₂₀-hydrocarbonoxy radical, wherein substituted means in each case that the hydrocarbon or hydrocarbonoxy radical each independently has at least one of the following substitutions: a hydrogen atom can be replaced by halogen, a CH₂ group can be replaced by **- O -** or - **NR^{z}** -, in which **R^{z}** is in each case independently selected from the group consisting of hydrogen, C₁-C₆-alkyl radical, C₆-C₁₄-aryl radical, and C₂-C₆-alkenyl radical; and in which the indices **a, b, b', c, c', c", d, d', d", d‴** specify the number of the respective siloxane unit in the compound and are each independently an integer in the range from 0 to 100 000, with the proviso that the sum of **a, b, b', c, c', c", d, d', d", d‴** together has at least the value 2 and at least one of the indices **b', c', c", d', d"** or **d‴** is not equal to 0; and
(b) at least one compound **B** selected from
(b1) a compound of the general formula (**II**)
**R⁴R⁵R⁶Si-O-R⁷** **(II),**
in which radicals **R⁴**, **R⁵** and **R⁶** are each independently selected from the group consisting of (i) hydrogen, (ii) halogen, (iii) unsubstituted or substituted C₁-C₂₀-hydrocarbon radical, (iv) unsubstituted or substituted, O-bonded or C-bonded C₁-C₂₀-hydrocarbonoxy radical, (v) organosilicon radical having 1-100 000 Si atoms, where two of the radicals **R⁴**, **R⁵** and **R⁶** may also form with each other a monocyclic or polycyclic, unsubstituted or substituted C₂-C₂₀-hydrocarbon radical, wherein substituted means in each case that the hydrocarbon or hydrocarbonoxy radical each independently has at least one of the following substitutions: a hydrogen atom can be replaced by halogen, **- C≡N**, - **OR^{z}**, - **SR^{z}**, - **NR^{z}₂,** - **PR^{z}₂**, - **O-CO-R^{z}**, - **NH-CO-R^{z},** - **O-CO-OR^{z}** or-**COOR^{z},** a CH₂ group can be replaced by **- O -, - S -** or - **NR^{z}** -, and a carbon atom can be replaced by a Si atom, in which **R^{z}** is in each case independently selected from the group consisting of hydrogen, C₁-C₆-alkyl radical, C₆-C₁₄-aryl radical, and C₂-C₆-alkenyl radical; and in which the radical **R⁷** is selected from the group consisting of (i) unsubstituted or substituted C₁-C₂₀-hydrocarbon radical, and (ii) unsubstituted or substituted C-bonded C₁-C₂₀-hydrocarbonoxy radical, wherein substituted means in each case that the hydrocarbon or hydrocarbonoxy radical each independently has at least one of the following substitutions: a hydrogen atom can be replaced by halogen, **- C≡N**, - **OR^{z}**, - **SR^{z}**, - **NR^{z}₂,** - **PR^{z}₂**, - **O-CO-R^{z}**, - **NH-CO-R^{z},** - **O-CO-OR^{z}** or-**COOR^{z},** a CH₂ group can be replaced by **- O -, - S -** or - **NR^{z}** -, and a carbon atom can be replaced by a Si atom, in which **R^{z}** is in each case independently selected from the group consisting of hydrogen, C₁-C₆-alkyl radical, C₆-C₁₄-aryl radical, and C₂-C₆-alkenyl radical; and/or
b2) a compound of the general formula (**II'**)
**R^{x}₃Si-O[-SiR^{x}₂-O]ₘ-[Si(OR⁷₃)R^{x}-O]ₙ-SiR^{x}₃** **(II'),**
in which the radicals **R^{x}** are each independently selected from the group consisting of (i) hydrogen, (ii) halogen, (iii) - **O-R⁷,** (iv) unsubstituted or substituted C₁-C₂₀-hydrocarbon radical, and (v) unsubstituted or substituted, C-bonded C₁-C₂₀-hydrocarbonoxy radical; and in which the radicals **R⁷** are in each case independently selected from the group consisting of (i) unsubstituted or substituted C₁-C₂₀-hydrocarbon radical and (ii) unsubstituted or substituted C-bonded C₁-C₂₀-hydrocarbonoxy radical, wherein substituted means in each case that the hydrocarbon or hydrocarbonoxy radical each independently has at least one of the following substitutions: a hydrogen atom can be replaced by halogen, **- C≡N,** - **OR^{z}**, - **SR^{z}**, - **NR^{z}₂,** - **PR^{z}₂**, **- O-CO-R^{z},** - **NH-CO-R^{z},** - **O-CO-OR^{z}** or - **COOR^{z},** a CH₂ group can be replaced by **- O -, - S -** or - **NR^{z}** -, and a carbon atom can be replaced by a Si atom, in which **R^{z}** is in each case independently selected from the group consisting of hydrogen, C₁-C₆-alkyl radical, C₆-C₁₄-aryl radical, and C₂-C₆-alkenyl radical; and in which **m** and **n** are each independently an integer in the range from 0 to 100 000, with the proviso that at least one group - **O-R⁷** is present in the compound; and
(c) at least one compound **C** selected from the cationic germanium(II) compound of the general formula (**III**)
**([Ge(II)Cp]⁺)ₐ X^{a-}** **(III),**
in which **Cp** is a **π**-bonded cyclopentadienyl radical of the general formula (**IIIa**) 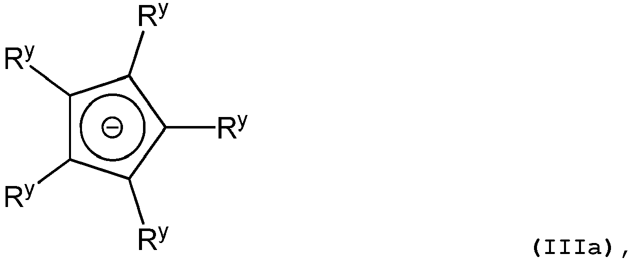 in which the radicals **R^{y}** are each independently selected from the group consisting of (i) triorganosilyl radical of the formula - **SiR^{b}₃,** in which the radicals **R^{b}** are each independently C₁-C₂₀-hydrocarbon radical, (ii) hydrogen, (iii) unsubstituted or substituted C₁-C₂₀-hydrocarbon radical, and (iv) unsubstituted or substituted C₁-C₂₀-hydrocarbonoxy radical, wherein in each case two radicals **R^{y}** can also form with each other a monocyclic or polycyclic C₂-C₂₀-hydrocarbon radical, wherein substituted means in each case that in the hydrocarbon or hydrocarbonoxy radical also at least one carbon atom can be replaced by a Si atom,
**X-** is a compound of the formula **[B(R^{a})₄]**⁻, in which the radicals **R^{a}** are in each case independently selected from aromatic C₆-C₁₄-hydrocarbon radical, in which at least one hydrogen atom has been each independently substituted by a radical selected from the group consisting of (i) fluorine, (ii) perfluorinated C₁-C₆-alkyl radical, and (iii) triorganosilyl radical of the formula - **SiR^{b}₃,** in which the radicals **R^{b}** are each independently C₁-C₂₀-alkyl radical; and
**a** can have the values 1, 2 or 3.

2. Mixture **M** according to Claim 1, wherein in formula (**I**) the radicals **R¹**, **R²** and **R³** are each independently selected from the group consisting of (i) hydrogen, (ii) chlorine, (iii) unsubstituted or substituted C₁-C₁₂-hydrocarbon radical, and (iv) unsubstituted or substituted C₁-C₁₂-hydrocarbonoxy radical, wherein substituted has the same definition as before; and in formula (**I'**) the radicals **R^{x}** are each independently selected from the group consisting of chlorine, C₁-C₆-alkyl radical, C₂-C₆-alkenyl radical, phenyl, and C₁-C₆-alkoxy radical, and the indices **a, b, b', c, c', c", d, d', d", d‴** are each independently selected from an integer in the range of 0 to 1.

3. Mixture **M** according to Claim 2, wherein in formula (**I**) the radicals **R¹**, **R²** and **R³** are each independently selected from the group consisting of (i) hydrogen, (ii) chlorine, (iii) C₁-C₆-alkyl radical, (iv) C₂-C₆-alkenyl radical, (v) unsubstituted or substituted phenyl radical, and (vi) C₁-C₆-alkoxy radical; and in formula (**I'**) the radicals **R^{x}** are each independently selected from the group consisting of chlorine, methyl, methoxy, ethyl, ethoxy, n-propyl, n-propoxy, and phenyl, and the indices **a, b, b', c, c', c", d, d', d", d‴** are each independently selected from an integer in the range from 0 to 1000.

4. Mixture **M** according to Claim 3, wherein in formula (**I**) the radicals **R¹**, **R²** and **R³** and in formula (**I'**) the radicals **R^{x}** are each independently selected from the group consisting of hydrogen, chlorine, methyl, methoxy, ethyl, ethoxy, n-propyl, n-propoxy, and phenyl, and the indices **a, b, b', c, c `, c'', d, d', d", d‴** are each independently selected from an integer in the range from 0 to 1000.

5. Mixture **M** according to any of Claims 1-4, wherein in formula (**II**) the radicals **R⁴, R⁵** and **R⁶** are each independently selected from the group consisting of (i) hydrogen, (ii) chlorine, (iii) unsubstituted or substituted C₁-C₁₄-hydrocarbon radical, and (iv) unsubstituted or substituted, O-bonded or C-bonded C₁-C₁₄-hydrocarbonoxy radical, and the radical **R⁷** is selected from the group consisting of (i) unsubstituted or substituted C₁-C₆-hydrocarbon radical, and (ii) unsubstituted or substituted C-bonded C₁-C₆-hydrocarbonoxy radical; and wherein in formula (**II'**) the radicals **R^{x}** are each independently selected from the group consisting of (i) hydrogen, (ii) chlorine, (iii) - **O-R⁷**, (iv) unsubstituted or substituted C₁-C₁₄-hydrocarbon radical, and (v) unsubstituted or substituted C-bonded C₁-C₁₄-hydrocarbonoxy radical, and the radicals **R⁷** are in each case independently selected from the group consisting of (i) unsubstituted or substituted C₁-C₆-hydrocarbon radical, and (ii) unsubstituted or substituted C-bonded C₁-C₆-hydrocarbonoxy radical.

6. Mixture **M** according to Claim 5, wherein in formula (**II**) the radicals **R⁴**, **R⁵** and **R⁶** are each independently selected from the group consisting of (i) hydrogen, (ii) chlorine, (iii) C₁-C₆-alkyl radical, (iv) C₁-C₆-alkenyl radical, (v) phenyl radical, and (vi) C₁-C₆-alkoxy radical, and the radical **R⁷** is selected from the group consisting of (i) unsubstituted or substituted C₁-C₆-hydrocarbon radical, and (ii) unsubstituted or substituted C-bonded C₁-C₆-hydrocarbonoxy radical; and in which in formula (**II'**) the radicals **Rx** are each independently selected from the group consisting of (i) hydrogen, (ii) chlorine, (iii) C₁-C₆-alkyl radical, (iv) C₁-C₆-alkenyl radical, (v) phenyl radical, (vi) - **O-R⁷**, and the radicals **R⁷** are in each case independently selected from the group consisting of (i) unsubstituted or substituted C₁-C₆-hydrocarbon radical, and (ii) unsubstituted or substituted C-bonded C₁-C₆-hydrocarbonoxy radical.

7. Mixture **M** according to any of Claims 1-6, wherein in formula (**III**) the radicals **R^{y}** are each independently selected from the group consisting of (i) C₁-C₃-alkyl radical and (ii) triorganosilyl radical of the formula - **SiR^{b}₃,** in which the radicals **R^{b}** are each independently C₁-C₂₀-alkyl radical.

8. Mixture **M** according to Claim 7, wherein in formula (**III**) all radicals **R^{y}** are methyl and the anions **X-**are selected from the group consisting of the compounds of the formula **[B(R^{a})₄]⁻,** in which the radicals **R^{a}** are each independently selected from aromatic C₆-C₁₄-hydrocarbon radical, in which all hydrogen atoms have been each independently substituted by a radical selected from the group consisting of (i) fluorine and (ii) triorganosilyl radical of the formula - **SiR^{b}₃,** in which the radicals **R^{b}** are each independently C₁-C₂₀-alkyl radical.

9. Mixture **M** according to Claim 8, wherein the compound **C** is selected from the group consisting of Cp*Ge⁺ B(C₆F₅)₄⁻; **Cp*Ge⁺ B[C₆F₄(4-TBS)]₄⁻**, where TBS = SiMe₂*tert*-butyl; **Cp*Ge⁺ B(2-NaphF)₄⁻,** where 2-NaphF = perfluorinated 2-naphthyl radical; and **Cp*Ge⁺ B[(C₆F₅)₃(2-NaphF)]⁻**, where 2-NaphF = perfluorinated 2-naphthyl radical.

10. Process for preparing siloxanes by means of a Piers-Rubinsztajn reaction of the mixture **M** according to any of Claims 1-9, wherein at least one compound **A** is reacted with at least one compound **B** in the presence of at least one compound C and in the presence of oxygen.

11. Process according to Claim 10, wherein the temperature is in a range from +40°C to +200°C and the pressure is in a range from 0.01 bar to 100 bar.

12. Process according to either of Claims 10 and 11, wherein the oxygen originates from an oxygen-containing gas mixture having an oxygen content of 0.1-100% by volume.

13. Process according to Claim 12, wherein the reaction is carried out under an air, lean air or oxygen atmosphere.

14. Process according to any of Claims 11-13, wherein the molar proportion of cationic germanium(II) compound with respect to the Si-H moieties present in the compound **A** is in a range from 0.001 mol% to 10 mol%.

15. Use of cationic germanium(II) compounds of the general formula (**III**) according to any of Claims 1, 7, 8 or 9 as catalyst for Piers-Rubinsztajn reactions.

## Revendications

1. Mélange **M** contenant
(a) au moins un composé **A** qui est choisi parmi
(a1) un composé de formule générale (**I**)
**R¹R²R³Si-H** **(I)**
dans laquelle les radicaux **R¹**, **R²** et **R³** sont choisis indépendamment les uns des autres dans le groupe constitué par (i) un atome d'hydrogène, (ii) un atome d'halogène, (iii) un radical hydrocarbyle en C₁-C₂₀ substitué ou non substitué, et (iv) un radical hydrocarbyloxy en C₁-C₂₀ substitué ou non substitué, deux des radicaux **R¹**, **R²** et **R³** pouvant également former ensemble un radical hydrocarbyle en C₂-C₂₀ monocyclique ou polycyclique, substitué ou non substitué, substitué signifiant chaque fois que le radical hydrocarbyle ou hydrocarbyloxy comporte indépendamment l'un de l'autre au moins l'une des substitutions suivantes : un atome d'hydrogène peut être remplacé par un atome d'halogène, **-CºN, -OR^{z}, -SR^{z}, -NR^{z}₂, -PR^{z}₂, -O-CO-R^{z}, -NH-CO-R^{z}**, **-O-CO-OR^{z}** ou **-COOR^{z},** un groupe CH₂ peut être remplacé par **-O-, -S- ou -NR^{z}-**, et un atome de carbone peut être remplacé par un atome de silicium, où **R^{z}** est choisi chaque fois indépendamment dans le groupe constitué par un atome d'hydrogène, un radical alkyle en C₁-C₆, un radical aryle en C₆-C₁₄, et un radical alcényle en C₂-C₆ ; et/ou
(a2) un composé de formule générale (**I'**)
**(SiO_{4/2})a(R^{X}SiO_{3/2})_{b}(HSiO_{3/2})_{b'} (R^{x}₂SiO_{2/2})c(R^{X}HSiO_{2/2})_{c'} (H₂SiO_{2/2})_{c"} (R^{x}₃SiO_{1/2})_{d}(HR^{x}₂SiO_{1/2})_{d}' (H₂R^{x}SiO_{1/2})_{d"} (H₃SiO_{1/2})d‴** **(I'),**
dans laquelle les radicaux **R^{x}** sont choisis indépendamment les uns des autres dans le groupe constitué par (i) un atome d'halogène, (ii) un radical hydrocarbyle en C₁-C₂₀ substitué ou non substitué, et (iii) un radical hydrocarbyloxy en C₁-C₂₀ substitué ou non substitué, substitué signifiant chaque fois que le radical hydrocarbyle ou hydrocarbyloxy comporte indépendamment l'un de l'autre au moins l'une des substitutions suivantes : un atome d'hydrogène peut être remplacé par un atome d'halogène, un groupe CH₂ peut être remplacé par **-O-** ou **-NR^{z}-,** où **R^{z}** est choisi chaque fois indépendamment dans le groupe constitué par un atome d'hydrogène, un radical alkyle en C₁-C₆, un radical aryle en C₆-C₁₄, et un radical alcényle en C₂-C₆ ; et où les indices **a, b, b', c, c', c", d, d', d'', d‴** indiquent le nombre de l'unité siloxane respective dans le composé et représentent indépendamment les uns des autres un nombre entier dans la plage de 0 à 100 000, étant entendu que la somme de **a, b, b', c, c' ,c", d, d', d", d‴** ensemble prend au moins la valeur 2 et au moins un des indices **b', c', c", d', d" ou d'' '** est différent de 0 ; et
b) au moins un composé **B** qui est choisi parmi
(b1) un composé de formule générale (**II**)
**R⁴R⁵R⁶Si-O-R⁷** **(II)**
dans laquelle les radicaux **R⁴, R⁵** et **R⁶** sont choisis indépendamment les uns des autres dans le groupe constitué par (i) un atome d'hydrogène, (ii) un atome d'halogène, (iii) un radical hydrocarbyle en C₁-C₂₀ substitué ou non substitué, (iv) un radical hydrocarbyloxy en C₁-C₂₀ substitué ou non substitué, lié à O ou lié à C, (v) un radical organosilicié ayant 1 - 100 000 atomes de silicium, deux des radicaux **R⁴, R⁵** et **R⁶** pouvant également former ensemble un radical hydrocarbyle en C₂-C₂₀ monocyclique ou polycyclique, substitué ou non substitué, substitué signifiant chaque fois que le radical hydrocarbyle ou hydrocarbyloxy comporte indépendamment l'un de l'autre au moins l'une des substitutions suivantes : un atome d'hydrogène peut être remplacé par un atome d'halogène, **-CºN, -OR^{z}, -SR^{z}**, **-NR^{z}₂, -PR^{Z}₂, -O-CO-R^{z}, -NH-CO-R^{z}**, **-O-CO-OR^{z}** ou **-COOR^{z},** un groupe CH₂ peut être remplacé par **-O-, -S- ou -NR^{z}-,** et un atome de carbone peut être remplacé par un atome de silicium, où **R^{z}** est choisi chaque fois indépendamment dans le groupe constitué par un atome d'hydrogène, un radical alkyle en C₁-C₆, un radical aryle en C₆-C₁₄, et un radical alcényle en C₂-C₆ ; et où le radical **R⁷** est choisi dans le groupe constitué par (i) un radical hydrocarbyle en C₁-C₂₀ substitué ou non substitué, et (ii) un radical hydrocarbyloxy en C₁-C₂₀ substitué ou non substitué, lié à C, substitué signifiant chaque fois que le radical hydrocarbyle ou hydrocarbyloxy comporte indépendamment l'un de l'autre au moins l'une des substitutions suivantes : un atome d'hydrogène peut être remplacé par un atome d'halogène, **-CºN, -OR^{z}**, **-SR^{z}**, **-NR^{z}₂**, **-PR^{Z}₂, -O-CO-R^{z}**, -**NH-CO-R^{z}**, **-O-CO-OR^{z}** ou **-COOR^{z},** un groupe CH₂ peut être remplacé par **-O-, -S- ou -NR^{z}-,** et un atome de carbone peut être remplacé par un atome de silicium, où **R^{z}** est choisi chaque fois indépendamment dans le groupe constitué par un atome d'hydrogène, un radical alkyle en C₁-C₆, un radical aryle en C₆-C₁₄, et un radical alcényle en C₂-C₆ ; et/ou
(b2) un composé de formule générale (**II**')
**R^{x}₃Si-O[-SiR^{x}₂-O]m-[Si(OR⁷₃)R^{x}-O]n-SiR^{x}₃** **(II'),**
dans laquelle les radicaux **R^{x}** sont choisis indépendamment les uns des autres dans le groupe constitué par (i) un atome d'hydrogène, (ii) un atome d'halogène, (iii) **-O-R⁷,** (iv) un radical hydrocarbyle en C₁-C₂₀ substitué ou non substitué, et (v) un radical hydrocarbyloxy en C₁-C₂₀ substitué ou non substitué, lié à C ; et où les radicaux **R⁷** sont choisis chacun indépendamment les uns des autres dans le groupe constitué par (i) un radical hydrocarbyle en C₁-C₂₀ substitué ou non substitué, et (ii) un radical hydrocarbyloxy en C₁-C₂₀ substitué ou non substitué, lié à C, substitué signifiant chaque fois que le radical hydrocarbyle ou hydrocarbyloxy comporte indépendamment l'un de l'autre au moins l'une des substitutions suivantes : un atome d'hydrogène peut être remplacé par un atome d'halogène, **-CºN, -OR^{z}**, **-SR^{z}**, **-NR^{z}₂**, **-PR^{Z}₂, -O-CO-R^{z}, -NH-CO-R^{z}**, **-O-CO-OR^{z}** ou **-COOR^{z},** un groupe CH₂ peut être remplacé par **-O-, -S- ou -NR^{z}-,** et un atome de carbone peut être remplacé par un atome de silicium, où **R^{z}** est choisi chaque fois indépendamment dans le groupe constitué par un atome d'hydrogène, un radical alkyle en C₁-C₆, un radical aryle en C₆-C₁₄, et un radical alcényle en C₂-C₆ ; et où **m** et **n** représentent indépendamment l'un de l'autre un nombre entier dans la plage de 0 à 100 000, étant entendu qu'au moins un groupe **-O-R⁷** est contenu dans le composé ; et
c) au moins un composé **C,** qui est choisi parmi les composés cationiques de germanium(II) de formule générale (**III**)
**([Ge(II)Cp]⁺)ₐ X^{a-}** **(III)**,
dans laquelle **Cₚ** est un radical cyclopentadiényle lié par une liaison **π,** de formule générale (**IIIa**) 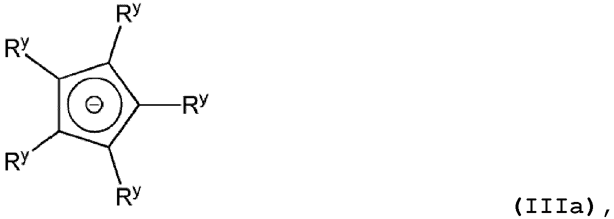 dans laquelle les radicaux **R^{y}** sont choisis indépendamment les uns des autres dans le groupe constitué par (i) un radical triorganosilyle de formule **-SiR^{b}₃**, dans laquelle les radicaux **R^{b}** représentent indépendamment les uns des autres un radical hydrocarbyle en C₁-C₂₀, (ii) un atome d'hydrogène, (iii) un radical hydrocarbyle en C₁-C₂₀ substitué ou non substitué, et (iv) un radical hydrocarbyloxy en C₁-C₂₀ substitué ou non substitué, chaque fois deux radicaux **R^{y}** pouvant également former ensemble un radical hydrocarbyle en C₂-C₂₀ monocyclique ou polycyclique, substitué signifiant chaque fois que dans le radical hydrocarbyle ou hydrocarbyloxy au moins un atome de carbone peut également être remplacé par un atome de silicium ;
**X⁻** est un composé de formule **[B(R^{a})₄]⁻,** dans laquelle les radicaux **R^{a}** sont choisis chacun indépendamment les uns des autres parmi un radical hydrocarbyle aromatique en C₆-C₁₄, dans lequel au moins un atome d'hydrogène est remplacé chaque fois indépendamment par un radical choisi dans le groupe constitué par (i) un atome de fluor, (ii) un radical alkyle en C₁-C₆ perfluoré, et (iii) un radical triorganosilyle de formule **-SiR^{b}₃**, dans laquelle les radicaux **R^{b}** représentent indépendamment les uns des autres un radical alkyle en C₁-C₂₀ ; et
**a** peut prendre les valeurs 1, 2 ou 3.

2. Mélange **M** selon la revendication 1, dans lequel dans la formule (**I**) les radicaux **R¹**, **R²** et **R³** sont choisis indépendamment les uns des autres dans le groupe constitué par (i) un atome d'hydrogène, (ii) un atome de chlore, (iii) un radical hydrocarbyle en C₁-C₁₂ substitué ou non substitué, et (iv) un radical hydrocarbyloxy en C₁-C₁₂ substitué ou non substitué, substitué ayant la même signification que celle donnée précédemment ; et dans la formule (**I'**) les radicaux **R^{x}** sont choisis indépendamment les uns des autres dans le groupe constitué par un atome de chlore, un radical alkyle en C₁-C₆, un radical alcényle en C₂-C₆, le radical phényle et un radical alcoxy en C₁-C₆, et les indices **a, b, b', c, c', c"**, **d, d', d", d‴** sont choisis indépendamment les uns des autres parmi les nombres entiers dans la plage de 0 à 1.

3. Mélange **M** selon la revendication 2, dans lequel dans la formule (**I**) les radicaux **R¹**, **R²** et **R³** sont choisis indépendamment les uns des autres dans le groupe constitué par (i) un atome d'hydrogène, (ii) un atome de chlore, (iii) un radical alkyle en C₁-C₆, (iv) un radical alcényle en C₂-C₆, (v) un radical phényle substitué ou non substitué, et (vi) un radical alcoxy en C₁-C₆ ; et dans la formule (**I'**) les radicaux **R^{x}** sont choisis indépendamment les uns des autres dans le groupe constitué par un atome de chlore, les groupes méthyle, méthoxy, éthoxy, n-propyle, n-propoxy, et phényle, et les indices **a, b, b', c, c', c", d, d', d", d‴** sont choisis indépendamment les uns des autres parmi les nombres entiers dans la plage de 0 à 1 000.

4. Mélange **M** selon la revendication 3, dans lequel dans la formule (**I**) les radicaux **R¹**, **R²** et **R³** et dans la formule (I') les radicaux **R^{x}** sont choisis indépendamment les uns des autres dans le groupe constitué par un atome d'hydrogène, un atome de chlore, les groupes méthyle, méthoxy, éthyle, éthoxy, n-propyle, n-propoxy, et phényle, et les indices **a, b, b', c, c' ,c", d, d', d", d‴** sont choisis indépendamment les uns des autres parmi les nombres entiers dans la plage de 0 à 1 000.

5. Mélange **M** selon l'une quelconque des revendications 1-4, dans lequel dans la formule (**II**) les radicaux **R⁴**, **R⁵** et **R⁶** sont choisis indépendamment les uns des autres dans le groupe constitué par (i) un atome d'hydrogène, (ii) un atome de chlore, (iii) un radical hydrocarbyle en C₁-C₁₄ substitué ou non substitué, et (iv) un radical hydrocarbyloxy en C₁-C₁₄ substitué ou non substitué, lié à O ou lié à C, et le radical **R⁷** est choisi dans le groupe constitué par (i) un radical hydrocarbyle en C₁-C₆ substitué ou non substitué, et (ii) un radical hydrocarbyloxy en C₁-C₆, substitué ou non substitué, lié à C, et dans lequel dans la formule (**II'**) les radicaux **R^{x}** sont choisis indépendamment les uns des autres dans le groupe constitué par (i) un atome d'hydrogène, (ii) un atome de chlore, (iii) **-O-R⁷,** (iv) un radical hydrocarbyle en C₁-C₁₄ substitué ou non substitué, et (v) un radical hydrocarbyloxy en C₁-C₁₄ substitué ou non substitué, lié à C, et les radicaux **R⁷** sont choisis chacun indépendamment les uns des autres dans le groupe constitué par (i) un radical hydrocarbyle en C₁-C₆ substitué ou non substitué, et (ii) un radical hydrocarbyloxy en C₁-C₆ substitué ou non substitué, lié à C.

6. Mélange **M** selon la revendication 5, dans lequel dans la formule (**II**) les radicaux **R⁴**, **R⁵** et **R⁶** sont choisis indépendamment les uns des autres dans le groupe constitué par (i) un atome d'hydrogène, (ii) un atome de chlore, (iii) un radical alkyle en C₁-C₆, (iv) un radical alcényle en C₁-C₆, (v) le radical phényle, et (vi) un radical alcoxy en C₁-C₆, et le radical **R⁷** est choisi dans le groupe constitué par (i) un radical hydrocarbyle en C₁-C₆ substitué ou non substitué, et (ii) un radical hydrocarbyloxy en C₁-C₆ substitué ou non substitué, lié à C, et dans lequel dans la formule (**II**') les radicaux **R^{x}** sont choisis indépendamment les uns des autres dans le groupe constitué par (i) un atome d'hydrogène, (ii) un atome de chlore, (iii) un radical alkyle en C₁-C₆, (iv) un radical alcényle en C₁-C₆, (v) le radical phényle, (vi) **-O-R⁷,** et les radicaux **R⁷** sont choisis chacun indépendamment les uns des autres dans le groupe constitué par (i) un radical hydrocarbyle en C₁-C₆ substitué ou non substitué, et (ii) un radical hydrocarbyloxy en C₁-C₆ substitué ou non substitué, lié à C.

7. Mélange **M** selon l'une quelconque des revendications 1-6, dans lequel dans la formule (**III**) les radicaux **R^{y}** sont choisis indépendamment les uns des autres dans le groupe constitué par (i) un radical alkyle en C₁-C₃ et (ii) un radical triorganosilyle de formule **-SiR^{b}**₃ dans lequel les radicaux **R^{b}** représentent indépendamment les uns des autres un radical alkyle en C₁-C₂₀.

8. Mélange **M** selon la revendication 7, dans lequel dans la formule (**III**) tous les radicaux **R^{y}** représentent un groupe méthyle et les anions **X⁻** sont choisis dans le groupe constitué par les composés de formule **[B(R^{a})₄]⁻,** dans laquelle les radicaux **R^{a}** sont choisis indépendamment les uns des autres parmi un radical hydrocarbyle aromatique en C₆-C₁₄, dans lequel tous les atomes d'hydrogène sont remplacés indépendamment les uns des autres par un radical choisi dans le groupe constitué par (i) un atome de fluor, (ii) un radical triorganosilyle de formule **-SiR^{b}₃**, dans laquelle les radicaux **R^{b}** représentent indépendamment les uns des autres un radical alkyle en C₁-C₂₀-.

9. Mélange **M** selon la revendication 8, dans lequel le composé **C** est choisi dans le groupe constitué par Cp*Ge⁺ B (C₆F₅)₄⁻; **Cp*Ge⁺ B[C₆F₄(4-TBS)]₄⁻**, où TBS = SiMe₂*tert*-butyle; **Cp*Ge⁺ B(2-NaphF)₄⁻**, où 2-NaphF = radical 2-naphtyle perfluoré ; et **Cp*Ge⁺ B[(C₆F₅)₃(2-NaphF)]⁻**où 2-NaphF = radical 2-naphtyle perfluoré.

10. Procédé pour la préparation de siloxanes au moyen d'une réaction de Piers-Rubinsztajn à partir du mélange **M** selon l'une quelconque des revendications 1-9, dans lequel au moins un composé **A** est mis en réaction avec au moins un composé **B** en présence d'au moins un composé **C** et en présence d'oxygène.

11. Procédé selon la revendication 10, dans lequel la température se situe dans une plage de +40 °C à +200 °C et la pression se situe dans une plage de 0,01 bar à 100 bars.

12. Procédé selon l'une quelconque des revendications 10 et 11, dans lequel l'oxygène provient d'un mélange de gaz contenant de l'oxygène, ayant une teneur en oxygène de 0,1 - 100 % en volume.

13. Procédé selon la revendication 12, dans lequel la réaction est effectuée sous atmosphère d'oxygène, d'air appauvri en oxygène ou d'air.

14. Procédé selon l'une quelconque des revendications 11-13, dans lequel la proportion molaire du composé cationique de germanium(II) par rapport aux groupements Si-H présents, dans le composé **A,** se situe dans une plage de 0,001 % en moles à 10 % en moles.

15. Utilisation de composés cationiques de Germanium(II) de formule générale (**III**) selon l'une quelconque des revendications 1, 7, 8 et 9 en tant que catalyseur pour des réactions de Piers-Rubinsztajn.
